# EUROPÄISCHE PATENTSCHRIFT

(11) **EP 2 452 803 B1**
(45) Veröffentlichungstag und Bekanntmachung des Hinweises auf die Patenterteilung: **22.07.2015**
(21) Anmeldenummer: 11184779.4
(22) Anmeldetag: 12.10.2011
(51) Int. Cl.: B29C 47/12, B29C 47/08, B29C 49/00, B29C 47/92, B29C 47/06

(54) **Vorrichtung zur Herstellung von Wellrohren aus thermoplastischem Kunststoff**
Device for producing corrugated thermoplastic tubes
Dispositif pour la fabrication des tubes thermoplastiques ondulées

(30) Priorität: 11.11.2010 DE 102010043786
(43) Veröffentlichungstag der Anmeldung: 16.05.2012
(73) Patentinhaber: Hegler, Ralph Peter, 97688 Bad Kissingen (DE)
(72) Erfinder: Hegler, Ralph Peter, 97688 Bad Kissingen (DE)
(74) Vertreter: Rau, Schneck & Hübner Patentanwälte Rechtsanwälte PartGmbB

(56) Entgegenhaltungen:
- EP-A2- 0 563 575
- US-A1- 2004 074 554
- US-A1- 2010 224 306
- US-B1- 6 260 852

## Beschreibung

Die Erfindung betrifft eine Vorrichtung zur Herstellung von Rohren aus thermoplastischem Kunststoff nach dem Oberbegriff des Anspruches 1. Derartige beispielsweise aus der EP 2 116 352 B1 oder der EP 0 563 575 B (entspr. US-PS 5,320,797) bekannte Vorrichtungen haben sich in der Praxis außerordentlich bewährt. Bei Ausgestaltung derartiger Vorrichtungen zur Herstellung von Rohren mit einer Nennweite ≥ 400 taucht das Problem auf, dass das auch als Rohrkopf bezeichnete Extrusions-Werkzeug sehr schwer wird, was zu nicht unbeträchtlichem konstruktiven Zusatzaufwand und darauf resultierend Zusatzkosten führt.

Aus US 2004/0074554 A1 ist eine Vorrichtung der gattungsgemäßen Art bekannt, bei der der Tragkörper von einem käfigartigen zylindrischen Verstellkörper umgeben ist, der einen Düsenring aufweist. Dieser zylindrische Verstellkörper kann in axialer Richtung verstellt werden, um die Weite des Düsenspaltes einzustellen. Hierzu ist stromaufwärts der geschlossenen Form ein Ring angeordnet, der mit Stiften versehen ist, die in geneigt verlaufende Langlöcher an dem zylindrischen Körper eingreifen. Durch ein Verschwenken des Rings mittels eines Linearantriebs wird der zylindrische Körper in Längsrichtung verschoben, wodurch die Verstellung der Spaltweite des Düsenspalts erfolgt.

Aus der US 6,260,852 B1 ist eine Vorrichtung zum Abdichten eines Ringspalts zwischen zwei Dichtflächen von Maschinenteilen mit Hilfe eines Rings, der an den beiden Dichtflächen anliegt, insbesondere an Extrusions-Maschinen, bekannt. Dieser Ring wird durch Krafteinleitung derart verformt, dass er an beiden Dichtflächen eng anliegt.

Aus der US 2010/0224306 A1 ist es bekannt, ein bereits vorhandenes Rohr mit kreisförmigen Querprofilierungen mit in einem Querschnitt in Form von Wellenbergen und Wellentälern mit einem zusätzlichen im Wesentlichen glattwandigen äußeren Rohr zu versehen. In diesem endlos hergestellten Rohr ist ein Abschnitt für ein Spitzende und benachbart hierzu eine Muffe ausgebildet. Zum Aufbringen dieses äußeren Rohres durchläuft das Wellrohr einen Spritzkopf, der an seiner Eingangsseite mit einer Dichtmanschette versehen ist, die so lang ausgebildet ist, dass sie stets an mindestens einem Wellenberg anliegt. Hierdurch wird eine Abdichtung des Dichtkopfes erreicht.

Der Erfindung liegt die Aufgabe zu Grunde, eine Vorrichtung der gattungsgemäßen Art so auszugestalten, dass auch bei einer Ausbildung für große Nennweiten das Gewicht des Extrusions-Werkzeugs möglichst gering ist, ohne die Abdichtung der Form nach außen zur Aufrechterhaltung des Teil-Vakuums zu gefährden.

Diese Aufgabe wird erfindungsgemäß durch die Merkmale im Kennzeichnungsteil des Anspruches 1 gelöst. Zwischen der durch die Halbschalen gebildeten zylindrischen Außenfläche und den in der Regel durch Formstege gebildeten Innen-Profilierungen kleinsten Durchmessers wird nur ein schmaler Ringspalt begrenzt, der als Drosselstelle wirkt und somit einen prozessrelevanten Druckanstieg im Bereich des Teil-Vakuums verhindert. In der Regel sind ein oder mehrere derartige Ringspalte zur Aufrechterhaltung des Teil-Vakuums ausreichend; zusätzlich kann durch die Weiterbildung nach Anspruch 3 aber noch eine zusätzliche Abdichtung erreicht werden, wobei die Weiterbildung nach Anspruch 4 besonders vorteilhaft ist.

Weitere vorteilhafte Ausgestaltungen ergeben sich aus den weiteren Unteransprüchen.

Weitere Merkmale, Vorteile und Einzelheiten ergeben sich aus den nachfolgenden Beschreibungen von zwei Ausführungsbeispielen der Erfindung an Hand der Zeichnung. Es zeigt:
- Fig. 1: eine Vorrichtung zur Herstellung eines Verbundrohres in schematischer Teil-Darstellung;
- Fig. 2: einen Teil-Längsschnitt durch die Vorrichtung nach Fig. 1,
- Fig. 3: einen Teil-Querschnitt durch die Vorrichtung nach Fig. 2 entsprechend der Schnittlinie III-III in Fig. 2 und
- Fig. 4: einen Teil-Längsschnitt entsprechend der Darstellung in Fig. 2 mit einem abgewandelten Extrusionswerkzeug.

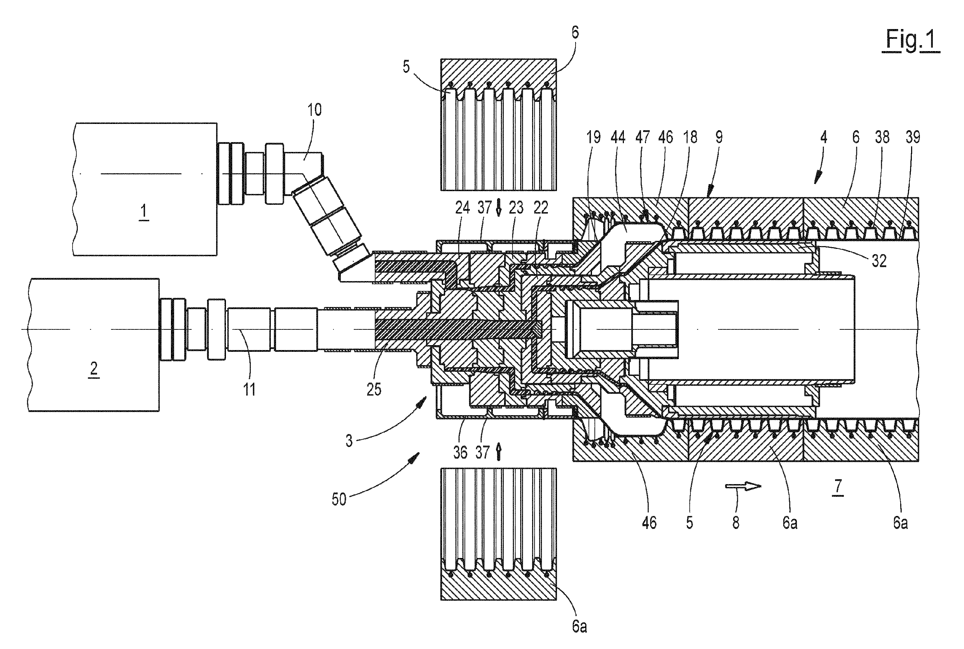

Wie Fig. 1 erkennen lässt, weist eine Vorrichtung zur Herstellung von Kunststoff-Verbundrohren mit Querrillen zwei Extruder 1, 2 auf, die an ein Extrusions-Werkzeug 3, das in der Praxis auch als Rohrkopf bezeichnet wird, angeschlossen sind. Aus dem Extrusions-Werkzeug 3 werden zwei Schläuche aus Kunststoffschmelze ineinander koextrudiert, aus denen das erwähnte Verbundrohr geformt wird. Hierzu dient eine in der Praxis auch als Korrugator bezeichnete Form-Maschine 4, die aus mit einer Innen-Profilierung 5 versehenen Halbkokillen 6, 6a gebildet werden, die auf einer Formstrecke 7 paarweise aneinander gesetzt und in einer Bewegungs-Richtung 8 der auf diese Weise gebildeten Form 9 dicht aneinander liegen. In der Form 9 werden die erwähnten Verbundrohre geformt. Diese Technik ist in der Praxis allgemein bekannt und beispielsweise in der EP 0 764 516 B1 (entspr. US-PS 5,693,347) dargestellt und beschrieben, worauf zur Erläuterung verwiesen werden darf.

Der Extruder 1 ist ein sogenannter Seiten-Extruder, weil er über eine seitliche Schmelze-Leitung 10 in das Extrusions-Werkzeug 3 einmündet, während der andere Extruder 2 mittig, d. h. konzentrisch zur Mittel-Längs-Achse 11 der Form 9 in das Extrusions-Werkzeug 3 einmündet.

Das Extrusions-Werkzeug 3 weist einen aus mehreren Teilen zusammengeschraubten Innen-Düsendorn 12 auf, der konzentrisch zur Achse 11 angeordnet ist. Der Innen-Düsendorn 12 ist von einem ebenfalls mehrteiligen Innen-Düsenmantel 13 umgeben, der wiederum ebenfalls konzentrisch zur Achse 11 von einem Außen-Düsendorn 14 umgeben ist. Letzterer ist wiederum von einem Außen-Düsenmantel 15 umgeben. Zwischen dem Innen-Düsendorn 12 und dem Innen-Düsenmantel 13 ist ein konzentrisch zur Achse 11 ausgebildeter Innenkanal 16 begrenzt, während zwischen dem Außen-Düsendorn 14 und dem Außen-Düsenmantel 15 ein Außen-Kanal 17 begrenzt ist. Der Innen-Kanal 16 mündet mittels einer Innen-Düse 18 aus dem Extrusions-Werkzeug 3 aus, während der Außen-Kanal 17 mittels einer Außen-Düse 19 aus dem Extrusions-Werkzeug 3 ausmündet. Aus den beiden Düsen 18, 19 werden der erwähnte Innen-Schlauch 20 bzw. der erwähnte Außen-Schlauch 21 extrudiert, die in beispielsweise aus der EP 0 563 575 B (entspr. US-PS 5,320,797) bekannten Weise zu einem Verbundrohr miteinander verbunden werden. Der Innen-Düsendorn 12, der Innen-Düsenmantel 13, der Außen-Düsendorn 14 und der Außen-Düsenmantel 15 sind unter Zwischenschaltung eines Innen-Sternverteilers 22 und eines Außen-Sternverteilers 23 und eines Pinolen-Werkzeugs 24 an einem Trag-Teil 25 befestigt. Im Bereich dieses Trag-Teils 25 wird das Extrusions-Werkzeug 3 über eine nicht dargestellte Tragkonstruktion auf einem ebenfalls nicht dargestellten Fundament abgestützt, wie es in der Praxis üblich ist. Die Schmelzeleitung 10 vom Seiten-Extruder 1 mündet in das Pinolen-Werkzeug 24 ein, wie Fig. 1 entnehmbar ist. Die Einzelheiten der Sternverteiler 22, 23 und des Pinolen-Werkzeugs 24 sind beispielsweise ausführlich in der EP 2 116 352 B1 dargestellt und beschrieben, worauf verwiesen wird.

Die Innen-Düse 18 wird von einem inneren Innen-Düsenring 26 und einem äußeren Innen-Düsenring 27 begrenzt, die einen den Innen-Kanal 16 mit der eigentlichen Innen-Düse 18 verbindenden, sich trichterförmig zur Innen-Düse 18 erweiternden Innen-Kanal-Endabschnitt 28 begrenzen. Die Außen-Düse 19 wird von einem inneren Außen-Düsenring 29 und einem äußeren Außen-Düsenring 30 begrenzt, die ebenfalls einen sich trichterförmig nach außen, und zwar zur Außen-Düse 19 hin, erweiternden Außen-Kanal-Endabschnitt 31 begrenzen. Der innere Innen-Düsenring 26 ist an dem Innen-Düsendorn 12 angebracht. Der äußere Innen-Düsenring 27 ist am Innen-Düsenmantel 13 angebracht. Der innere Außen-Düsenring 29 ist am Außen-Düsendorn 14 angebracht. Der äußere Außen-Düsenring 30 ist am Außen-Düsenmantel 15 befestigt. Am inneren Innen-Düsenring 26 ist ein Kühl- und Kalibrierdorn 32 angebracht.

Die Innen-Düse 18 hat einen Durchmesser D18, während die Außen-Düse 19 einen Durchmesser D19 aufweist. Der vom Außen-Düsenmantel 15 umgebene, als Düsen-Tragkörper 33 bezeichnete Abschnitt des Extrusions-Werkzeugs 3 weist einen Außendurchmesser D33 auf, der deutlich kleiner als D18 und D19 ist. Der Außen-Düsenmantel 15 ist mit in Form von Heizbändern ausgebildeten Heizungen 34 umgeben. Auch der äußere Innen-Düsenring 27 kann mit einer entsprechenden Heizung 35 umgeben sein.

Der Düsen-Tragkörper 33 ist mit dünnwandigen Halbschalen 36 aus Aluminium umgeben, die den Düsen-Tragkörper 33 mit einer durchgehenden zylindrischen Außenfläche 37 umgeben. Der Durchmesser D37 dieser zylindrischen Außenfläche 37 entspricht im Wesentlichen dem Durchmesser D19 der Außen-Düse 19. Wenn Schläuche größeren Durchmessers D18 und D19 extrudiert werden sollen, so werden die Düsenringe 26, 27 29, 30 ausgetauscht. Entsprechend werden die Halbschalen 36 durch Halbschalen größeren Durchmessers ersetzt. Der übrige Düsen-Tragkörper 33 bleibt unverändert. Der Düsen-Tragkörper 33 kann also auch bei Erzeugung von Rohren unterschiedlicher Nennweite jeweils unverändert bleiben. Er ist dem zu erzeugenden Rohr mit der kleinsten möglichen Nennweite angepasst.

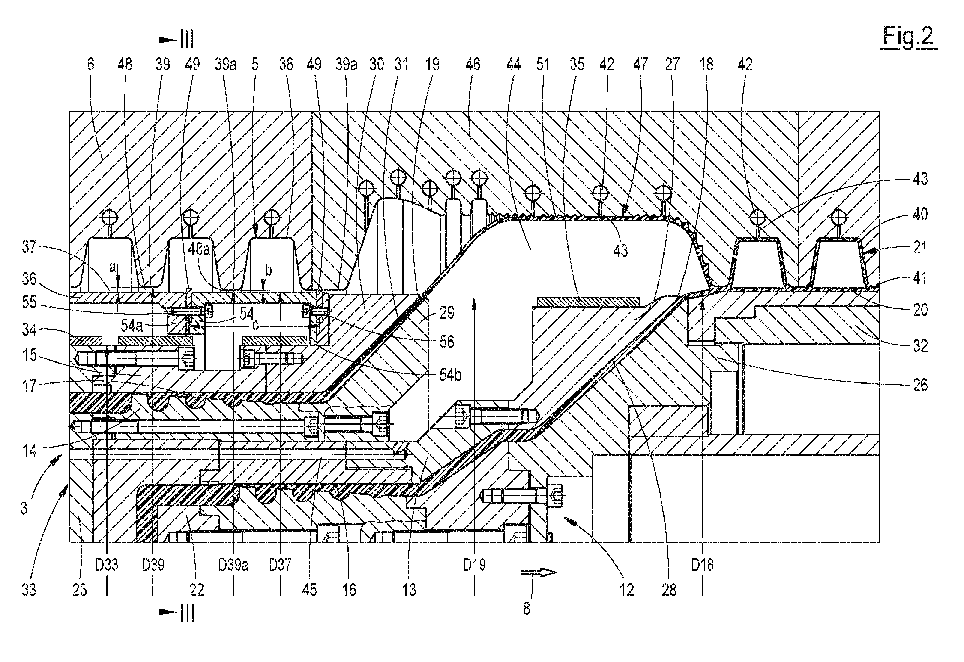

Wie Fig. 2 entnehmbar ist, besteht die Innen-Profilierung 5 der Halbkokillen 6, 6a aus ringförmigen Formausnehmungen 38, zwischen denen jeweils ebenfalls ringförmige Formstege 39 mit einem kleinsten Innen-Durchmesser D39 ausgebildet sind. In den Formausnehmungen 38 wird der Außen-Schlauch 21 zu Wellenbergen 40 verformt, während durch die Formstege 39 der Außen-Schlauch 21 zu Wellentälern 41 des Außen-Schlauchs 21 verformt wird. Im Bereich der Wellentäler 41 wird der Innen-Schlauch 20 mit dem Außen-Schlauch 21 auf dem Kühl- und Kalibrierdorn 32 verschweißt. Diese Technik ist im Einzelnen beispielsweise aus der bereits erwähnten EP 0 563 575 B (entspr. US-PS 5,320,797) bekannt. Die Formausnehmungen 38 werden durch in den Halbkokillen 6, 6a ausgebildete Vakuumkanäle 42, die über Vakuum-Schlitze 43 mit den jeweiligen Formausnehmungen 38 verbunden sind, mit Teil-Vakuum beaufschlagt. In den Raum 44 zwischen den Schläuchen 20, 21 wird entweder Stützluft mit dem erforderlichen Überdruck gegenüber Atmosphärendruck eingegeben oder aber dieser Raum 44 wird nach außen entlüftet. Beides erfolgt über einen Gaskanal 45. Wenn in einem fortlaufend herzustellenden Verbundrohr in festgelegten Abständen eine Rohrmuffe 51 ausgeformt werden soll, dann werden Halbkokillen 46, die eine entsprechende Muffenausnehmung 47 aufweisen, eingesetzt, was ebenfalls in Fig. 2 dargestellt ist. Auch diese Halbkokillen 46 sind mit entsprechenden Vakuumkanälen 42 versehen, von denen aus Vakuum-Schlitze 43 in die Muffenausnehmung 47 führen. Wie vorstehend erläutert, erfolgt die Ausformung des Außenschlauches 21 zu Wellenbergen 40 bzw. Rohrmuffen 51. Sie kann also - wie vorstehend dargelegt - nach dem sogenannten Vakuumverfahren oder aber nach dem kombinierten Blas-Vakuum-Verfahren erfolgen.

Wie Fig. 2 entnehmbar ist, besteht zwischen den Formstegen 39 der Halbkokillen 6, 6a und der zylindrischen Außenfläche 37 der Halbschalen 36 nur ein schmaler Ringspalt 48 mit einer Spaltweite a von 2 mm bis 10 mm. Zwischen den beiden Formstegen 39a, die - bezogen auf die Bewegungs-Richtung 8 - der Muffenausnehmung 47 unmittelbar nacheilen, und der zylindrischen Außenfläche 37 ist jeweils ein Ringspalt 48a mit der Spaltweite b ausgebildet, für den gilt: 2 mm ≤ b ≤ 5 mm. Der Grund liegt darin, dass der sich unmittelbar an die Rohrmuffe 51 anschließende gewellte Abschnitt des Rohres nach der Herstellung herausgeschnitten wird. Die Drosslung kann also verstärkt werden, ohne dass das Verbundrohr im Wellental 41 geschwächt wird. Der Innen-Durchmesser D39a dieser Formstege 39a ist in der Regel also etwas kleiner als der Innen-Durchmesser D39. Zusätzlich können an den Halbschalen 36 radial geringfügig nach außen vorstehende Dichtungen 49 aus einem geeigneten Kunststoff angebracht sein, die jeweils bei der Bewegung der Form 9 in Richtung 8 mit den Formstegen 39 in Eingriff kommen und hierdurch eine vollständige Abdichtung bilden. Wenn mehrere derartige lamellenartige Dichtungen 49 vorgesehen sind, dann ist es zweckmäßig, deren Abstand c in Bewegungs-Richtung 8 so zu wählen, dass jeweils immer mindestens eine Dichtung 49 an einem Formsteg 39 bzw. 39a anliegt. Unabhängig von diesen Dichtungen 49 können die Ringspalte 48 bzw. 48a so eng gewählt werden, dass das über die Vakuum-Kanäle 42 und die Vakuum-Schlitze 43 zwischen den Formausnehmungen 38 bzw. der Muffenausnehmung 47 und dem Außen-Schlauch 21 aufgebaute Teil-Vakuum auch gehalten wird. Der Außen-Schlauch 21 wird also im Verlauf der Rohrherstellung zuverlässig an der Innen-Profilierung 5 der Form 9 gehalten bzw. dort angelegt.

Sobald der Innen-Schlauch 20 gegen den zumindest teilweise in der Muffenausnehmung 47 zur Rohrmuffe 51 vorgeformten Außen-Schlauch 21 angelegt wird, ist das dem die Muffenausnehmung 47 aufweisenden Paar von Halbkokillen 46 nachfolgende Paar von Halbkokillen 6, 6a bereits an das Paar von Halbkokillen 46 angelegt. Somit ergibt sich eine ausreichende Anzahl von Drosselstellen, sobald die Entlüftung zwischen dem Außen-Schlauch 21 und dem Innen-Schlauch 20 beginnt.

Damit die Form 9 bereits mit ausreichendem Abstand stromaufwärts der Außen-Düse 19 und damit auch der Innen-Düse 18 abgeschlossen ist, also das Teil-Vakuum in der geschilderten Weise halten kann, ist es zweckmä-ßig, wenn der Transport der Halbkokillen 6, 6a bzw. 46 nach der Herausnahme aus der Formstrecke 7 und zurück zum stromaufwärtigen Ende 50 der Formstrecke 7 der Weise erfolgt, wie es in Fig. 1 angedeutet ist. Die jeweiligen Halbkokillen 6, 6a und entsprechend die Halbkokillen 46 werden nach dem Rücktransport quer zur Bewegungs-Richtung 8 der Form wieder in die Formstrecke 7 eingeführt, wodurch sofort die entsprechende Abdichtung gegenüber der durch die Halbschalen 36 gebildeten zylindrischen Außenfläche 37 erreicht wird. Die Einzelheiten dieses Transports sind in der EP 0 764 516 B1 (entspr. US-PS 5,693,347 A) und der EP 0 007 556 A (entspr. US-PS 4,212,618 A) dargestellt und beschrieben, worauf verwiesen werden darf.

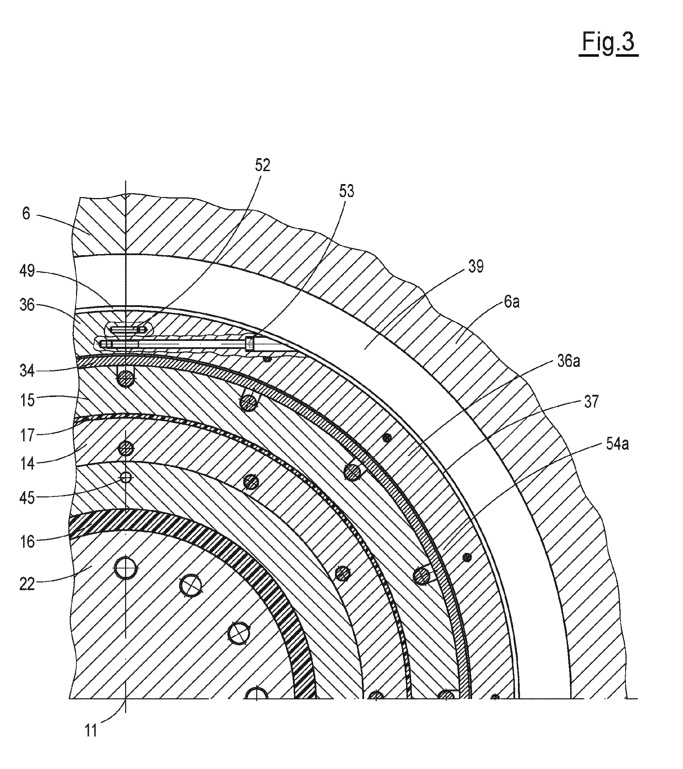

Wie sich insbesondere aus Fig. 3 ergibt, sind jeweils zwei Halbschalen 36, 36a mittels Passstiften 52 zueinander positioniert und zentriert und mittels Schrauben 53 miteinander verbunden, wodurch jeweils zwei Halbschalen 36 und 36a sich über den vollen Umfang erstrecken, also eine Art Rohrabschnitt bilden.

Die Halbschalen 36 und 36a weisen jeweils an ihren Enden Flansche 54, 54a, 54b auf, wobei jeweils zwei in Richtung der Achse 11 aneinander liegende Flansche 54, 54a mittels Schrauben 55 miteinander verbunden sind. Die Gesamtheit der Halbschalen 36, 36a ist über die einzelnen Flansche 54, 54a, 54b gegenüber dem Düsentragkörper 33 in radialer Richtung abgestützt und mittels der Schrauben 53 auf den Außen-Düsenring 30 aufgespannt.

Die Dichtungen 49 sind jeweils in der Trennfuge zwischen zwei in axialer Richtung aneinander liegenden Flanschen 54 bzw. 54a angeordnet und mittels der Schrauben 55 und 56 verspannt.

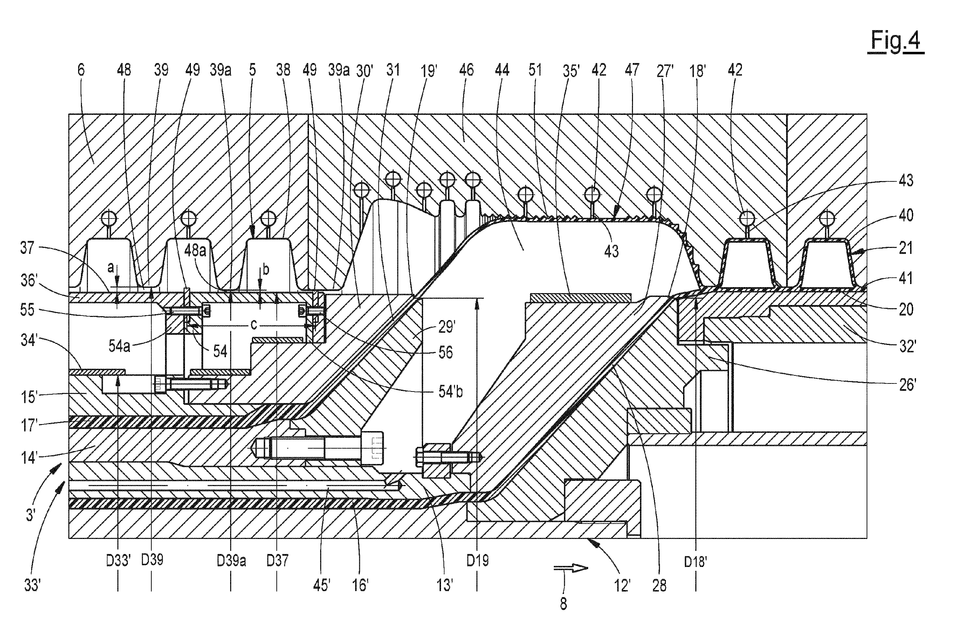

Das Ausführungsbeispiel nach Fig. 4 unterscheidet sich von dem nach Fig. 2 nur hinsichtlich konstruktiver Einzelheiten. Konstruktiv identische Teile sind daher mit denselben Bezugsziffern wie in Fig. 2 versehen. Soweit die Teile funktionell gleich, aber konstruktiv geringfügig anders sind, sind die Teile mit denselben Bezugsziffern wie in Fig. 2, aber mit einem hochgesetzten Strich bezeichnet.

## Patentansprüche

1. Vorrichtung zur Herstellung von Rohren aus thermoplastischem Kunststoff mit kreisringförmigen Querprofilierungen mit einem Querschnitt in Form von Wellenbergen (40) und Wellentälern (41),
- mit Halbkokillen (6, 6a),
-- die sich paarweise entlang einer geraden Formstrecke (7) zu einer geschlossenen, in einer Bewegungs-Richtung (8) bewegbaren Form (9) mit einer Mittel-Längs-Achse (11) ergänzen,
-- die im Kreislauf entgegen der Bewegungs-Richtung (8) der Form (9) zu einem stromaufwärtigen Ende (50) der Formstrecke (7) transportierbar sind und
-- die eine mit Teil-Vakuum beaufschlagbare, kreisringförmige Innen-Profilierung (5) mit einem kleinsten Innen-Durchmesser D39 zur Erzeugung der Querprofilierung aufweisen,
und
- mit einem Extrusions-Werkzeug (3, 3'),
-- das einen Düsen-Tragkörper (33, 33') mit einem Außen-Durchmesser D33 oder D33' mit mindestens einem Kanal (17, 17') für Kunststoff-Schmelze aufweist,
-- das eine Düse (19, 19') mit einem Durchmesser D19 aufweist, die mittels eines sich zur Düse (19, 19') hin erweiternden Kanal-Endabschnitts (31) mit dem Kanal (17, 17') verbunden ist,
-- das einen inneren Düsenring (29, 29') und einen äußeren Düsenring (30, 30') aufweist, die zwischen sich den Kanal-Endabschnitt (31) begrenzen und die am Düsen-Tragkörper (33, 33') befestigt sind,
**dadurch gekennzeichnet,**
**dass** der Außen-Durchmesser D33 oder D33' des Düsentragkörpers (33, 33') kleiner ist als der Durchmesser D19 der Düse (19, 19'),
**dass** der Düsen-Tragkörper (33, 33') - bezogen auf die Bewegungs-Richtung (8) - stromaufwärts des äußeren Düsenrings (30) mit auswechselbar angebrachten hohlen Halbschalen (36, 36a, 36') verkleidet ist, die eine zylindrische Außenfläche (37) mit einem Durchmesser D37 bilden und
**dass** zwischen der zylindrischen Außenfläche (37) und der Innen-Profilierung (5) mit dem kleinsten Innen-Durchmesser D39 ein schmaler Ringspalt (48) mit einer Spaltweite a gebildet ist.

2. Vorrichtung nach Anspruch 1, **dadurch gekennzeichnet,**
**dass** für die Spaltweite a gilt: 2 mm ≤ a ≤ 10 mm.

3. Vorrichtung nach Anspruch 1 oder 2, **dadurch gekennzeichnet,**
**dass** an den Halbschalen (36, 36a, 36') über die Außenfläche (37) nach außen vorstehende, mit der Innen-Profilierung (5) kleinsten Innen-Durchmessers D39 in dichtende Anlage bringbare Dichtungen (49) vorgesehen sind.

4. Vorrichtung nach Anspruch 3, **dadurch gekennzeichnet,**
**dass** mehrere Dichtungen (49) in einem solchen Abstand c in Richtung der Mittel-Längs-Achse (11) vorgesehen sind, dass immer mindestens eine Dichtung (49) an einer Innen-Profilierung (5) kleinsten Durchmessers D39 dichtend anliegt.

5. Vorrichtung nach einem der Ansprüche 1 bis 4, **dadurch gekennzeichnet,**
**dass** die Innen-Profilierung (5) kleinsten Innen-Durchmessers D39 durch Formstege (39) gebildet ist.

6. Vorrichtung nach einem der Ansprüche 1 bis 5, **dadurch gekennzeichnet,**
**dass** die Halbschalen (36) aus Aluminium oder einer Aluminiumlegierung bestehen.

7. Vorrichtung nach einem der Ansprüche 1 bis 6, **dadurch gekennzeichnet,**
**dass** innerhalb der Halbschalen (36, 36a, 36') Heizungen (34, 34') auf dem Düsen-Tragkörper (33, 33') angebracht sind.

8. Vorrichtung nach einem der Ansprüche 1 bis 7, **dadurch gekennzeichnet,**
**dass** in mindestens einem Paar von Halbkokillen (46) eine Muffenausnehmung (47) ausgebildet ist und
**dass** - bezogen auf die Bewegungs-Richtung (8) der Muffenausnehmung (47) - unmittelbar nacheilend die Innenprofilierung als mindestens ein Formsteg (39a) mit einem kleinsten Innen-Durchmesser D39a ausgebildet ist, der einen Ringspalt (48a) zur zylindrischen Außenflanke (37) mit einer Spaltweite b begrenzt, für die gilt 2 mm ≤ b ≤ 5 mm.

9. Vorrichtung nach Anspruch 8, **dadurch gekennzeichnet,**
**dass** ein bis drei Formstege (39a) vorgesehen sind.

## Claims

1. Device for producing pipes made of thermoplastic with annular transverse profilings with a cross section in the form of undulation peaks (40) and undulation troughs (41),
- with half-moulds (6, 6a),
-- which complete one another pairwise along a straight mould section (7) to form a closed mould (9), which is moveable in a motion direction (8), with a central longitudinal axis (11),
-- which are transportable in the circuit counter to the movement direction (8) of the mould (9) to an upstream end (50) of the mould section (7) and
-- which have an annular internal profiling (5), which is loadable with a partial vacuum, with a smallest internal diameter D39 to produce the transverse profiling,
and
- with an extrusion tool (3, 3'),
-- which has a nozzle support body (33, 33') with an external diameter D33 or D33' with at least one channel (17, 17') for plastic melt,
-- which has a nozzle (19, 19') with a diameter D19, which is connected by means of a channel end portion (31) widening toward the nozzle (19, 19') to the channel (17, 17'),
-- which has an inner nozzle ring (29, 29') and an outer nozzle ring (30, 30'), which between them limit the channel end portion (31) and which are fastened to the nozzle support body (33, 33'),
**characterized**
**in that** the external diameter D33 or D33' of the nozzle support body (33, 33') is smaller than the diameter D19 of the nozzle (19, 19'),
**in that** the nozzle support body (33, 33') - in relation to the movement direction (8) - upstream of the outer nozzle ring (30), is covered with exchangeably attached hollow half-shells (36, 36a, 36'), which form a cylindrical external face (37) with a diameter D37 and
**in that** a narrow annular gap (48) with a gap width a is formed between the cylindrical external face (37) and the internal profiling (5) with the smallest internal diameter D39.

2. Device according to claim 1, **characterized**
**in that** there applies to the gap width a: 2 mm ≤ a ≤ 10 mm.

3. Device according to claim 1 or 2, **characterized**
**in that** seals (49) projecting outwardly over the external face (37) are provided on the half-shells (36, 36a, 36'), wherein the seals (49) are bringable into sealing abutment with the internal profiling (5) with the smallest internal diameter D39.

4. Device according to claim 3, **characterized**
**in that** a plurality of seals (49) are provided at a spacing c in the direction of the centre longitudinal axis (11) such that at least one seal (49) always rests in a sealing manner on an internal profiling (5) with the smallest diameter D39.

5. Device according to any one of claims 1 to 4, **characterized**
**in that** the internal profiling (5) with the smallest internal diameter D39 is formed by mould webs (39).

6. Device according to any one of claims 1 to 5, **characterized**
**in that** the half-shells (36) consist of aluminum or an aluminum alloy.

7. Device according to any one of claims 1 to 6, **characterized**
**in that** heating devices (34, 34') are attached to the nozzle support body (33, 33') within the half-shells (36, 36a, 36').

8. Device according to any one of claims 1 to 7, **characterized**
**in that** a socket recess (47) is configured in a least one pair of halfmoulds (46) and
**in that** - in relation to the movement direction (8) of the socket recess (47) - directly following, the internal profiling is configured as at least one mould web (39a) with a smallest internal diameter D39a, which limits an annular gap (48a) with respect to the cylindrical external flank (37) with a gap width b, to which there applies 2 mm ≤ b ≤ 5 mm.

9. Device according to claim 8, **characterized**
**in that** one to three mould webs (39a) are provided.

## Revendications

1. Dispositif pour la fabrication de tubes en matière synthétique thermoplastique avec des profils transversaux de forme annulaire, dotés d'une section transversale formant des sommets d'ondulation (40) et de creux d'ondulation (41),
- comprenant des demies coquilles (6, 6a),
-- qui se complètent par paires le long d'un trajet de moulage (7) rectiligne pour former un moule (9), fermé, mobile dans une direction de déplacement (8), possédant un axe longitudinal central (11),
-- qui peuvent être transportés dans un circuit en sens contraire par rapport à la direction de déplacement (8) du moule (9) vers une extrémité en amont (50) du trajet de moulage (7), et
-- qui présentent un profilé intérieur (5) en forme d'anneau, pouvant être soumis à un vide partiel, avec un diamètre intérieur D39, inférieur, pour compléter le profilé transversal,
et
- comprenant un outil d'extrusion (3, 3'),
-- qui présente un corps support de buse (33, 33'), avec un diamètre extérieur D33 ou D33', avec au moins un canal (17, 17') pour la matière synthétique fondue,
-- qui présente une buse (19, 19'), avec un diamètre D19, qui est reliée avec le canal (17, 17') au moyen d'une section terminale (31) de canal s'élargissant vers la buse (19, 19'),
-- qui présente un anneau de buse intérieur (29, 29') et un anneau de buse extérieur (30, 30'), qui délimitent entre eux la section terminale (31) de canal et qui sont fixés sur le corps support de buse (33, 33'),
**caractérisé en ce**
**que** le diamètre extérieur D33 ou D33' du corps support de buse (33, 33') est inférieur au diamètre D19 de la buse (19, 19'),
**que** le corps support de buse (33, 33') est habillé de demies coquilles creuses (36, 36a, 36'), rapportées en pouvant être échangées en amont de l'anneau de buse extérieur (30) par rapport à la direction de déplacement (8), demies coquilles qui forment une surface extérieure cylindrique (37) avec un diamètre D37, et
**qu'**une fente annulaire (48) fine, possédant le diamètre intérieur D39 inférieur, est formée entre la surface extérieure cylindrique (37) et le profilé intérieur (5).

2. Dispositif selon la revendication 1, **caractérisé en ce**
**que** l'on a la relation : 2 mm ≤ a ≤ 10 mm concernant la largeur de la fente.

3. Dispositif selon les revendications 1 ou 2, **caractérisé en ce**
**que** des joints (49) pouvant être dans un agencement étanche sont prévus sur les demies coquilles (36, 36a, 36') par-dessus la surface extérieure (37) faisant saillie vers extérieur avec le profilé intérieur (5) de diamètre intérieur D39 inférieur.

4. Dispositif selon la revendication 3, **caractérisé en ce**
**que** plusieurs joints (49) sont prévus à une distance c dans la direction de l'axe longitudinal central (11) telle que toujours au moins un joint (49) s'appuie de manière étanche sur le profilé intérieur (5) de diamètre D39 inférieur.

5. Dispositif selon l'une des revendications 1 à 4, **caractérisé en ce**
**que** le profilé intérieur (5) de diamètre intérieur D39 inférieur est formé par des passages dans le moule (39).

6. Dispositif selon l'une des revendications 1 à 5, **caractérisé en ce**
**que** les demies coquilles (36) sont constituées d'aluminium ou d'un alliage d'aluminium.

7. Dispositif selon l'une des revendications 1 à 6, **caractérisé en ce**
**que** des systèmes de chauffage (34, 34') sont implantés à l'intérieur des demies coquilles (36, 36a, 36') sur le corps support de buse (33, 33').

8. Dispositif selon l'une des revendications 1 à 7, **caractérisé en ce**
**qu'**un renfoncement de manchon (47) est formé dans au moins une paire de demies coquilles (46), et
**qu'**immédiatement après, par rapport au renfoncement de manchon (47), dans la direction de déplacement (8), au moins un passage dans le moule (39a) avec un diamètre intérieur D39 inférieur est formé, qui délimite une fente annulaire (48a) par rapport au flanc extérieur cylindrique (37) avec une largeur de fente b, pour laquelle on a la relation 2 mm ≤ b ≤ 5 mm.

9. Dispositif selon la revendication 8, **caractérisé en ce**
**qu'**un à trois passages dans le moule (39a) sont prévus.
